# EUROPÄISCHE PATENTSCHRIFT

(11) **EP 3 999 829 B1**
(45) Veröffentlichungstag und Bekanntmachung des Hinweises auf die Patenterteilung: **24.06.2026**
(21) Anmeldenummer: 20737454.7
(22) Anmeldetag: 08.07.2020
(51) Int. Cl.: G01M 1/22, G01M 17/013, G01M 1/28

(54) **VERFAHREN UND VORRICHTUNG ZUM BESTIMMEN EINER UNWUCHT EINES RADES EINES FAHRZEUGS**
METHOD AND DEVICE FOR DETERMINING AN IMBALANCE OF A VEHICLE WHEEL
PROCÉDÉ ET DISPOSITIF DE DÉTERMINATION D'UN DÉFAUT D'ÉQUILIBRAGE D'UNE ROUE D'UN VÉHICULE

(30) Priorität: 18.07.2019 DE 102019210656
(43) Veröffentlichungstag der Anmeldung: 25.05.2022
(73) Patentinhaber: Robert Bosch GmbH, 70442 Stuttgart (DE)
(72) Erfinder: STRAUSS, Tobias, 74182 Obersulm (DE); HASBERG, Carsten, 74360 Ilsfeld-Auenstein (DE); EINHORN, Erik, 31157 Sarstedt (DE)
(86) Internationale Anmeldenummer: PCT/EP2020/069236
(87) Internationale Veröffentlichungsnummer: WO 2021/008967

(56) Entgegenhaltungen:
- DE-A1- 102017 006 940

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Bei einem Fahrzeug kann eine Unwucht eines Rades auftreten. Eine Erkennung einer solchen Unwucht kann aus Gründen des Fahrkomforts und der Fahrsicherheit erwünscht sein.

Die DE 10 2017 006 940 A1 betrifft ein Verfahren zur Ermittlung von Schwingungen, die von den vier Rädern eines Kraftfahrzeugs im Betrieb desselben angeregt werden, wobei die Beiträge der einzelnen Räder zur Schwingungsanregung ermittelt werden sollen.

### Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es können beispielsweise Signale einer im Fahrzeug verbauten inertialen Messeinheit zum Erkennen von Unwucht genutzt werden. Es wurde insbesondere erkannt, dass Signale von einer im Fahrzeug angebrachten

inertialen Messeinheit Frequenzanteile aufweisen können, welche mit einer Raddrehzahl korrelieren und auf Unwuchten hindeuten können.

Vorteilhafterweise kann gemäß Ausführungsformen insbesondere ein Fahrkomfort erhöht werden, da durch die Erkennung der Unwucht auch deren Ursache beseitigt werden kann. Ebenso kann eine Fahrsicherheit durch die Unwuchtbestimmung erhöht werden. Die Unwucht kann frühzeitig, auf einfache Weise und zuverlässig erkannt werden. So kann beispielsweise ein Fahrer entsprechend gewarnt werden, sodass geeignete Gegenmaßnahmen ergriffen werden können.

Es wird ein Verfahren zum Bestimmen einer Unwucht eines Rades eines Fahrzeugs vorgestellt, wobei das Verfahren die Schritte, wie in Anspruch 1 definiert, aufweist.

Dieses Verfahren kann beispielsweise in Software oder Hardware oder in einer Mischform aus Software und Hardware beispielsweise in einem Steuergerät implementiert sein. Bei dem Fahrzeug kann es sich um ein Kraftfahrzeug handeln. Das Rad kann eine Felge und einen Reifen aufweisen. Die Unwucht kann durch den Reifen, durch die Felge und zusätzlich oder alternativ durch eine Aufhängung oder Montage des Rades an dem Fahrzeug bedingt sein. Die inertiale Messeinheit kann zumindest einen Beschleunigungssensor und zusätzlich oder alternativ zumindest einen Drehratensensor aufweisen. Die Beschleunigung kann eine lineare Beschleunigung oder eine Drehbeschleunigung sein. Die mindestens eine Bezugsachse kann eine Längsachse, eine Querachse und zusätzlich oder alternativ eine Hochachse des Fahrzeugs sein. Das Unwuchtsignal kann eine charakteristische Größe einer erkannten Unwucht anzeigen. Im Schritt des Ermittelns kann der Phasenwinkelverlauf des Rades unter Verwendung des Inertialsensorsignals und optional einer Geschwindigkeitsinformation über eine Geschwindigkeit des Fahrzeugs ermittelt werden. Die durch Unwuchten aller Räder des Fahrzeugs bewirkten periodischen Störeinflüsse können physikalische Größen wie Störbeschleunigungen und zusätzlich oder alternativ Stördrehraten aufweisen. Insbesondere kann im Schritt des Ermittelns der Phasenwinkelverlauf des Rades unter Verwendung eines Phasenwinkelverlaufs des Rades ermittelt werden. Der Phasenwinkelverlauf kann beispielsweise Positionen eines Referenzpunktes des Rades während einer Umdrehung des Rades darstellen. So kann eine radindividuelle Erkennung von Unwucht erreicht werden.

Im Schritt des Einlesens wird ein Drehzahlsignal von einer Schnittstelle zu einem Inkrementalgeber zum Erfassen einer Drehzahl des Rades eingelesen. Hierbei kann im Schritt des Ermittelns der Phasenwinkelverlauf des Rades unter Verwendung des Drehzahlsignals ermittelt werden. Eine solche Ausführungsform bietet den Vorteil, dass der Phasenwinkelverlauf des Rades auf zuverlässige und genaue Weise ermittelt werden kann, um so eine etwaige Unwucht des Rades aufgrund der Korrelation zwischen Drehzahl und relevanten Frequenzanteilen einfach und sicher bestimmen zu können.

Im Schritt des Ermittelns wird das Inertialsensorsignal gefiltert, um lediglich mit einer Drehzahl zumindest eines Rades korrelierte Frequenzanteile durchzulassen. Hierbei können die Frequenzanteile die periodischen Störeinflüsse repräsentieren. Insbesondere können Oberschwingungen höherer Ordnung aus dem Inertialsensorsignal herausgefiltert, ausgeblendet bzw. entfernt werden. Eine solche Ausführungsform bietet den Vorteil, dass eine Signalverarbeitung vereinfacht werden kann.

Ferner kann im Schritt des Ermittelns dem Rad einer der periodischen Störeinflüsse aus dem Inertialsensorsignal zugeordnet werden, um das Unwuchtsignal zu ermitteln. Genauer gesagt kann dem Rad in Abhängigkeit von dem Phasenwinkelverlauf ein mit der Drehzahl und dem Phasenwinkelverlauf in Korrelation stehender periodischer Störeinfluss zugeordnet werden. Eine solche Ausführungsform bietet den Vorteil, dass eine sichere, radindividuelle Unwuchterkennung realisiert werden kann.

Zudem kann im Schritt des Ermittelns eine Signalverarbeitung des Inertialsensorsignals durchgeführt werden. Hierbei kann die Signalverarbeitung unter Verwendung einer Rechenvorschrift durchgeführt werden, die ein Schätzverfahren, eine Ausgleichsrechnung und zusätzlich oder alternativ eine Regressionsanalyse aufweist, insbesondere die Methode kleinster Quadrate. Dabei kann die Signalverarbeitung als eine automatische Signalverarbeitung ausgeführt werden. Eine solche Ausführungsform bietet den Vorteil, dass das Unwuchtsignal einfach und möglichst genau ermittelt werden kann.

Gemäß einer Ausführungsform kann im Schritt des Ermittelns ein Unwuchtsignal ermittelt werden, unter Verwendung dessen das Rad des Fahrzeugs identifizierbar ist und zusätzlich oder alternativ die Unwucht quantifizierbar ist. Dazu kann das Unwuchtsignal eine Zuordnungsinformation aufweisen, die eine Zuordnung einer periodischen Störbeschleunigung aus dem Inertialsensorsignal zu dem Rad unter Verwendung des Phasenwinkelverlaufs repräsentiert. Zusätzlich oder alternativ kann das Unwuchtsignal eine Größeninformation aufweisen, die eine mit der Unwucht in Verbindung stehende messbare physikalische Größe repräsentiert, beispielsweise eine Signalamplitude des Inertialsensorsignals. Eine solche Ausführungsform bietet den Vorteil, dass Gegenmaßnahmen zum Beseitigen der Unwucht frühzeitig und zielgerichtet eingeleitet werden können.

Auch kann das Verfahren einen Schritt des Bereitstellens des Unwuchtsignals zur Ausgabe an ein Steuergerät des Fahrzeugs aufweisen. Eine solche Ausführungsform bietet den Vorteil, dass eine Weiterverarbeitung und zusätzlich oder alternativ eine Verwendung des Unwuchtsignals innerhalb und bei Bedarf auch außerhalb des Fahrzeugs auf einfache Weise ermöglicht werden kann, indem das Unwuchtsignal auf unkomplizierte Weise zur Verfügung gestellt wird.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Bestimmung einer Unwucht eines Rades eines Fahrzeugs, insbesondere eine Überwachung aller Räder eines Fahrzeugs auf etwaige Unwucht. Hierzu kann die Vorrichtung beispielsweise auf Sensorsignale wie Inertialsensorsignale, insbesondere Beschleunigungssignale und zusätzlich oder alternativ Drehratensignale, und auf Drehzahlsignale zugreifen. Die Bestimmung oder Überwachung erfolgt durch eine Signalverarbeitung und Modellierung unter Verwendung des Inertialsensorsignals und optional zusätzlich des Drehratensignals. Die Vorrichtung ist ausgebildet, um als Ausgabe ein Unwuchtsignal bereitzustellen, welches die bestimmte bzw. erkannte Unwucht charakterisiert.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Fahrzeugs mit einer Vorrichtung gemäß einem Ausführungsbeispiel;
Fig. 2 ein Ablaufdiagramm eines Verfahrens zum Bestimmen gemäß einem Ausführungsbeispiel;
Fig. 3 ein schematisches Signalverlaufsdiagramm eines Inertialsensorsignals;
Fig. 4 ein schematisches Amplitudenspektrum zu der Darstellung von Fig. 3;
Fig. 5 ein schematisches Spektrogramm;
Fig. 6 ein schematisches Spektrogramm als einen Ausschnitt aus Fig. 5; und
Fig. 7 eine Überlagerung des schematischen Spektrogramms aus Fig. 6 mit einem Geschwindigkeitsverlauf.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

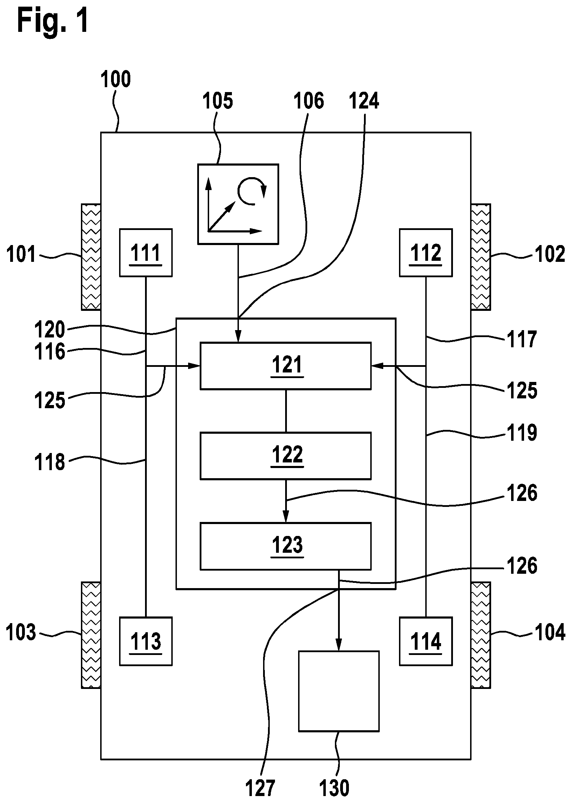

Fig. 1 zeigt eine schematische Darstellung eines Fahrzeugs 100 mit einer Vorrichtung 120 gemäß einem Ausführungsbeispiel. Bei dem Fahrzeug 100 handelt es sich um ein Kraftfahrzeug. Das Fahrzeug 100 weist lediglich beispielhaft vier Räder auf, ein erstes Rad 101, ein zweites Rad 102, ein drittes Rad 103 und ein viertes Rad 104.

Ferner weist das Fahrzeug 100 eine inertiale Messeinheit 105 zum Erfassen und/oder Messen einer Beschleunigung und/oder Drehrate des Fahrzeugs 100, beispielsweise eine Beschleunigung und/oder Drehrate eines Karosserieteils des Fahrzeugs 100, relativ zu mindestens einer Bezugsachse auf. Die Messeinheit 105 ist auch ausgebildet, um ein Inertialsensorsignal 106 bereitzustellen, wobei das Inertialsensorsignal 106 die Beschleunigung des Fahrzeugs 100 relativ zu der mindestens einen Bezugsachse repräsentiert und zusätzlich oder alternativ die Drehrate des Fahrzeugs 100 um die zumindest eine Bezugsachse repräsentiert.

Gemäß dem hier dargestellten Ausführungsbeispiel ist jedem der Räder 101, 102, 103 und 104 des Fahrzeugs 100 ein Inkrementalgeber zum Erfassen einer Drehzahl des jeweiligen Rades zugeordnet. Unter einem Inkrementalgeber kann insbesondere auch ein Inkrementaldrehgeber, Drehimpulsgeber oder Drehgeber verstanden werden. Ein erster Inkrementalgeber 111 ist dem ersten Rad 101 zugeordnet. Der erste Inkrementalgeber 111 ist ausgebildet, um ein erstes Drehzahlsignal 116 bereitzustellen, dass die Drehzahl des ersten Rades 101 repräsentiert. Ein zweiter Inkrementalgeber 112 ist dem zweiten Rad 102 zugeordnet. Der zweite Inkrementalgeber 112 ist ausgebildet, um ein zweites Drehzahlsignal 117 bereitzustellen, dass die Drehzahl des zweiten Rades 102 repräsentiert. Ein dritter Inkrementalgeber 113 ist dem dritten Rad 103 zugeordnet. Der dritte Inkrementalgeber 113 ist ausgebildet, um ein drittes Drehzahlsignal 118 bereitzustellen, dass die Drehzahl des dritten Rades 103 repräsentiert. Ein vierter Inkrementalgeber 114 ist dem vierten Rad 104 zugeordnet. Der vierte Inkrementalgeber 114 ist ausgebildet, um ein viertes Drehzahlsignal 119 bereitzustellen, dass die Drehzahl des vierten Rades 104 repräsentiert.

In dem Fahrzeug 100 ist eine Bestimmungsvorrichtung 120 bzw. Vorrichtung 120 zum Bestimmen einer Unwucht eines Rades 101, 102, 103, 104 bzw. mindestens eines Rades 101, 102, 103, 104 des Fahrzeugs 100 angeordnet. Die Vorrichtung 120 weist eine Einleseeinrichtung 121 und eine Ermittlungseinrichtung 122 auf. Gemäß dem hier dargestellten Ausführungsbeispiel weist die Vorrichtung 120 auch eine Bereitstellungseinrichtung 123 auf. Die Einleseeinrichtung 121 und die Ermittlungseinrichtung 122 sind signalübertragungsfähig miteinander verbunden. Die Ermittlungseinrichtung 122 ist auch signalübertragungsfähig mit der Bereitstellungseinrichtung 123 verbunden. Ferner weist die Vorrichtung 120 eine erste Eingangsschnittstelle 124 und eine zweite Eingangsschnittstelle 125 sowie eine Ausgangsschnittstelle 127 auf. Über die erste Eingangsschnittstelle 124 ist die Vorrichtung 120 signalübertragungsfähig mit der inertialen Messeinheit 105 verbunden. Über die zweite Eingangsschnittstelle 125 ist die Vorrichtung 120 signalübertragungsfähig mit den Inkrementalgebern 111, 112, 113, 114 verbunden. Über die Ausgangsschnittstelle 127 ist die Vorrichtung 120 signalübertragungsfähig mit einem Steuergerät 130 des Fahrzeugs 100 verbunden.

Die Einleseeinrichtung 121 ist ausgebildet, um das Inertialsensorsignal 106 von einer Schnittstelle, hier der ersten Eingangsschnittstelle 124 zu der inertialen Messeinheit 105 einzulesen. Die durch das Inertialsensorsignal 106 repräsentierte Beschleunigung und/oder Drehrate weist eine Überlagerung von durch Unwuchten aller Räder 101, 102, 103, 104 des Fahrzeugs 100 bewirkten periodischen Störeinflüssen auf. Bei den Störeinflüssen handelt es sich um Störbeschleunigungen, Stördrehraten oder andere physikalische Größen. Gemäß dem hier dargestellten Ausführungsbeispiel ist die Einleseeinrichtung 121 auch ausgebildet, um mindestens eines der Drehzahlsignale 116, 117, 118, 119 von einer Schnittstelle, hier der zweiten Eingangsschnittstelle 125, zu mindestens einem der Inkrementalgeber 111, 112, 113, 114 einzulesen. Ferner ist die Einleseeinrichtung 121 ausgebildet, um die eingelesenen Signale, hier das Inertialsensorsignal 106 und mindestens eines der Drehzahlsignale 116, 117, 118, 119 an die Ermittlungseinrichtung 122 weiterzuleiten oder für die Ermittlungseinrichtung 122 zugreifbar zu machen.

Die Ermittlungseinrichtung 122 ist ausgebildet, um unter Verwendung mindestens eines der Drehzahlsignale 116, 117, 118, 119 den Phasenwinkelverlauf des mindestens einen Rades 101, 102, 103, 104 zu ermitteln. Ferner ist die Ermittlungseinrichtung 122 ausgebildet, um unter Verwendung des Inertialsensorsignals 106 und des Phasenwinkelverlaufs des mindestens einen Rades 101, 102, 103, 104 ein die Unwucht des mindestens einen Rades 101, 102, 103, 104 charakterisierendes Unwuchtsignal 126 zu ermitteln. Die Ermittlungseinrichtung 120 ist gemäß dem hier dargestellten Ausführungsbeispiel ferner ausgebildet, um das Unwuchtsignal 126 an die Bereitstellungseinrichtung 123 weiterzuleiten oder für die Bereitstellungseinrichtung 123 zugreifbar zu machen.

Gemäß einem Ausführungsbeispiel ist die Ermittlungseinrichtung 122 ausgebildet, um das Unwuchtsignal 126 unter Verwendung des Inertialsensorsignals 106, jedoch ohne den Phasenwinkelverlauf des mindestens einen Rades 101, 102, 103, 104 zu ermitteln. Gemäß einem Ausführungsbeispiel zeigt das Unwuchtsignal 126 lediglich das generelle Vorhandensein einer Unwucht an, ohne dass die Unwucht einem der Räder 101, 102, 103, 104 zugeordnet wird. Gemäß einem Ausführungsbeispiel ist die Ermittlungseinrichtung 122 ausgebildet, um das Unwuchtsignal 126 ferner unter Verwendung eines Geschwindigkeitsignals zu ermitteln, das eine aktuelle Geschwindigkeit oder einen Geschwindigkeitsverlauf des Fahrzeugs 100 repräsentiert.

Gemäß einem Ausführungsbeispiel ändern sich die Phasenwinkelverläufe der Räder 101, 102, 103, 104 während einer Geradeausfahrt des Fahrzeugs 100 nicht zueinander. Bei einer Kurvenfahrt des Fahrzeugs 100 legen die kurvenäußeren Räder, beispielsweise die Räder 101, 103, eine größere Wegstrecke als die kurveninneren Räder, beispielsweise die Räder 102, 104, zurück. Dabei können sich auch die Wegstrecken der Räder 101, 103 sowie die Wegstrecken der Räder 102, 104 unterscheiden. Somit können sich die Phasenwinkelverläufe aller Räder 101, 102, 103, 104 während einer Kurvenfahrt des Fahrzeugs 100 zueinander ändern. Dies kann zu einer Veränderung des zeitlichen Auftretens der Störeinflüsse der Räder 101, 102, 103, 104 in dem Inertialsensorsignal 106 führen. Gemäß einem Ausführungsbeispiel werden die Störeinflüsse in dem Inertialsensorsignal 106 den einzelnen Rädern 101, 102, 103, 104 zugeordnet, indem eine Veränderung der Phasenwinkelverläufe der Räder 101, 102, 103, 104 in Bezug zu einer zeitlich zugeordneten Veränderung des zeitlichen Auftretens der Störeinflüsse der Räder 101, 102, 103, 104 in dem Inertialsensorsignal 106 gesetzt wird.

Gemäß einem Ausführungsbeispiel ist die Ermittlungseinrichtung 122 ausgebildet, um zum Ermitteln des Unwuchtsignals 126 das Inertialsensorsignal 106 zu filtern, um lediglich mit einer Drehzahl zumindest eines Rades 101, 102, 103, 104 korrelierte Frequenzanteile durchzulassen, wobei die Frequenzanteile die periodischen Störeinflüsse repräsentieren. Zusätzlich oder alternativ ist die Ermittlungseinrichtung 122 insbesondere ausgebildet, um dem mindestens einen Rad 101, 102, 103, 104 jeweils einen der periodischen Störeinflüsse aus dem Inertialsensorsignal 106 zuzuordnen, um das Unwuchtsignal 126 zu ermitteln. Die Ermittlungseinrichtung 122 ist insbesondere ausgebildet, um zum Ermitteln des Unwuchtsignals 126 eine Signalverarbeitung des Inertialsensorsignals 106 durchzuführen, wobei die Signalverarbeitung unter Verwendung einer Rechenvorschrift durchgeführt wird, die ein Schätzverfahren, eine Ausgleichsrechnung und/oder eine Regressionsanalyse aufweist, insbesondere die Methode kleinster Quadrate. Insbesondere ist die Ermittlungseinrichtung 122 ausgebildet, um ein Unwuchtsignal 126 zu ermitteln, unter Verwendung dessen das die Unwucht aufweisende Rad 101, 102, 103, 104 des Fahrzeugs 100 identifizierbar ist und/oder die Unwucht quantifizierbar ist. Beispielsweise zeigt das Unwuchtsignal 126 eine Unwucht eines Rades 101, 102, 103, 104 an, wenn ein dem Rad 101, 102, 103, 104 zugeordneter Störeinfluss einen Schwellenwert überschreitet. Zusätzlich oder alternativ zeigt das Unwuchtsignal 126 eine Größe der Unwucht an, die beispielsweise aus einer Größe des dem Rad 101, 102, 103, 104 zugeordneten Störeinflusses bestimmt wird.

Die Bereitstellungseinrichtung 123 ist ausgebildet, um das Unwuchtsignal 126 zur Ausgabe an das Steuergerät 130 des Fahrzeugs 100 über die Ausgangsschnittstelle 127 bereitzustellen. Das Steuergerät 130 ist gemäß dem hier dargestellten Ausführungsbeispiel getrennt von der Vorrichtung 120 dargestellt. Gemäß einem anderen Ausführungsbeispiel kann das Steuergerät 130 auf Vorrichtung 120 aufweisen, wobei anders ausgedrückt die Vorrichtung 120 als ein Teil des Steuergeräts 130 ausgeführt sein kann. Alternativ oder zusätzlich kann die Vorrichtung 120 oder die Bereitstellungsvorrichtung 123 auch ausgebildet sein, um das Unwuchtsignal 126 für eine andere oder weitere Einrichtung des Fahrzeugs 100 bereitzustellen.

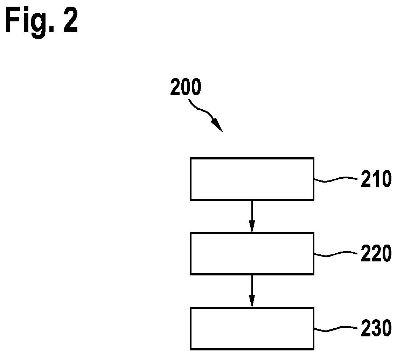

Fig. 2 zeigt ein Ablaufdiagramm eines Verfahrens 200 zum Bestimmen gemäß einem Ausführungsbeispiel. Das Verfahren 200 ist ausführbar, um eine Unwucht eines Rades eines Fahrzeugs zu bestimmen. Dabei ist das Verfahren 200 zum Bestimmen unter Verwendung bzw. mittels der Vorrichtung aus Fig. 1 oder einer ähnlichen Vorrichtung ausführbar. Das Verfahren 200 zum Bestimmen weist einen Schritt 210 des Einlesens und einen Schritt 220 des Ermittelns auf.

In dem Schritt 210 des Einlesens wird von einer Schnittstelle zu einer inertialen Messeinheit des Fahrzeugs ein Inertialsensorsignal eingelesen. Das Inertialsensorsignal repräsentiert eine Beschleunigung und/oder eine Drehrate des Fahrzeugs relativ zu mindestens einer Bezugsachse. Dabei weist die durch das Inertialsensorsignal repräsentierte Beschleunigung und/oder Drehrate eine Überlagerung von durch Unwuchten aller Räder des Fahrzeugs bewirkten periodischen Störeinflüssen auf.

Nachfolgend wird bei dem Verfahren 200 zum Bestimmen in dem Schritt 220 des Ermittelns unter Verwendung des Inertialsensorsignals und optional zusätzlich eines Phasenwinkelverlaufs des Rades ein die Unwucht des Rades charakterisierendes Unwuchtsignal ermittelt.

Gemäß einem Ausführungsbeispiel weist das Verfahren 200 zum Bestimmen auch einen Schritt 230 des Bereitstellens auf. In dem Schritt 230 des Bereitstellens wird das Unwuchtsignal zur Ausgabe an ein Steuergerät des Fahrzeugs bereitgestellt.

Im Schritt 210 des Einlesens ein Drehzahlsignal von einer Schnittstelle zu einem Inkrementalgeber zum Erfassen einer Drehzahl des Rades eingelesen. Ferner wird hierbei im Schritt 220 des Ermittelns der Phasenwinkelverlauf des Rades unter Verwendung des Drehzahlsignals ermittelt.

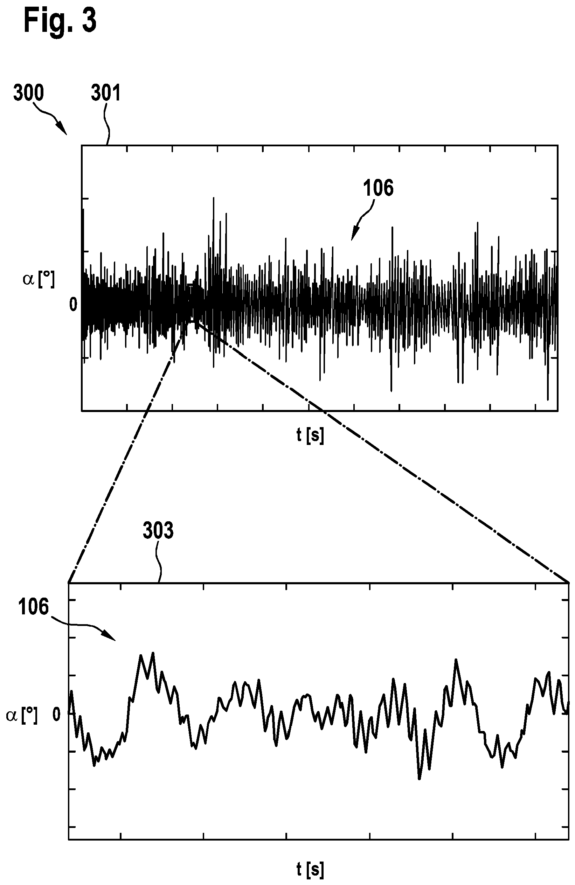

Fig. 3 zeigt ein schematisches Signalverlaufsdiagramm 300 eines Inertialsensorsignals 106. Bei dem Inertialsensorsignal 106 handelt es sich um das Inertialsensorsignal aus einer der vorstehend beschriebenen Figuren oder ein ähnliches Inertialsensorsignal. Das Signalverlaufsdiagramm 300 ist in zwei Teildarstellungen unterteilt, wobei in einer ersten Teildarstellung 301 ein Signalverlauf des Inertialsensorsignals 106 über eine erste Zeitspanne dargestellt ist und wobei zweiten Teildarstellung 303 der Signalverlauf des Inertialsensorsignals 106 über eine zweite Zeitspanne dargestellt ist, die einen Teilabschnitt der ersten Zeitspanne repräsentiert.

In der ersten Teildarstellung 301 und in der zweiten Teildarstellung 303 des Signalverlaufsdiagramms 300 ist jeweils an der Abszissenachse die Zeit t in Sekunden [s] aufgetragen und ist an der Ordinatenachse ein durch eine inertiale Messeinheit gemessener Winkel α in Grad [°] aufgetragen.

Gemäß diesem Ausführungsbeispiel ist in der ersten Teildarstellung 301 eine Zeitspanne von 1000 Sekunden und Winkel zwischen -10° und +15° aufgetragen. Das Inertialsensorsignal 106 schwingt um 0°. In der zweiten Teildarstellung 303 ist eine Zeitspanne von ca. 3 Sekunden aufgetragen. Aus der zweiten Teildarstellung 303 ist ansatzweise eine von Oberschwingungen überlagerte Grundschwingung des Inertialsensorsignals 106 ersichtlich.

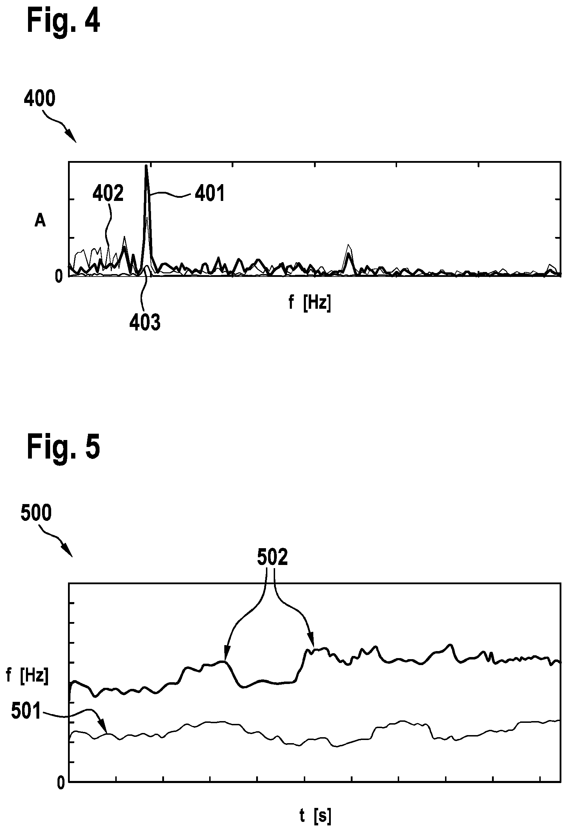

Fig. 4 zeigt ein schematisches Amplitudenspektrum 400 zu der Darstellung von Fig. 3. In dem Amplitudenspektrum 400 sind an der Abszissenachse die Frequenz f in Hertz [Hz] und an der Ordinatenachse der Betrag bzw. die Amplitude A aufgetragen. Eine erste Kurve 401 repräsentiert ein Wanken eines Fahrzeugs, eine zweite Kurve 402 ein Nicken des Fahrzeugs und eine dritte Kurve 403 repräsentiert ein Gieren des Fahrzeugs. Beispielhaft sind auf der Absizsse Frequenzen zwischen 20 und 50 Hz und auf der Ordinate Amplituden zwischen 0 und 0,6 aufgetragen.

Fig. 5 zeigt ein schematisches Spektrogramm 500, genauer gesagt ein Spektrogramm einer Drehrate, insbesondere hinsichtlich Rollen und Wanken eines Fahrzeugs, mit glatten, zeitveränderlichen Frequenzen und Oberschwingungen bzw. Harmonischen höherer Ordnung, bzw. ein Spektrum über der Zeit. In dem Spektrogramm 500 ist an der Abszissenachse die Zeit t in Sekunden [s] aufgetragen und ist an der Ordinatenachse die Frequenz f in Hertz [Hz] aufgetragen. Dabei sind in dem Spektrogramm 500 Vibrationen 501 und Oberschwingungen 502 bzw. Harmonischen höherer Ordnung eingezeichnet. Beispielhaft ist auf der Absizsse ein Zeitraum zwischen 0 und 1000 Sekunden und auf der Ordinate Frequenzen zwischen 0 und 50 Hz aufgetragen.

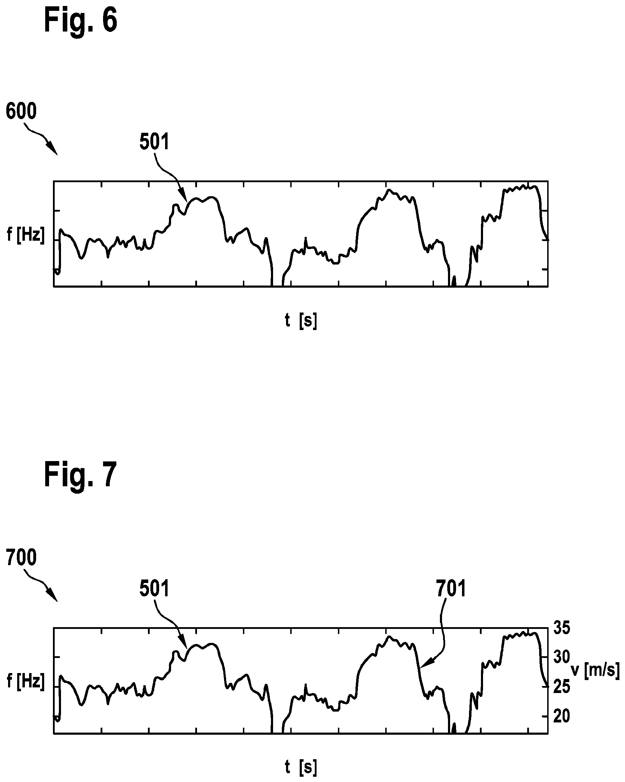

Fig. 6 zeigt ein schematisches Spektrogramm 600 als einen Ausschnitt aus Fig. 5. Anders ausgedrückt zeigt Fig. 6 ein schematisches Spektrogramm 600, das einen Teilabschnitt des Spektrogramms aus Fig. 5 darstellt. Hierbei ist in Fig. 6 das Spektrogramm aus Fig. 5 ohne die Oberschwingungen bzw. Harmonischen höherer Ordnung, sondern lediglich mit den Vibrationen 501 gezeigt. Beispielhaft ist auf der Absizsse ein Zeitraum zwischen 0 und 1000 Sekunden und auf der Ordinate Frequenzen zwischen 8 und 16 Hz aufgetragen.

Fig. 7 zeigt eine Überlagerung 700 des schematischen Spektrogramms aus Fig. 6 mit einem Geschwindigkeitsverlauf 701. In dem Diagramm der Überlagerung 700 ist an der Abszissenachse die Zeit t in Sekunden [s] aufgetragen, ist an einer ersten Ordinatenachse die Frequenz f in Hertz [Hz] aufgetragen und ist an einer zweiten Ordinatenachse eine Geschwindigkeit v eines Fahrzeugs in Metern pro Sekunde [m/s] aufgetragen. Die Geschwindigkeit v ist mittels eines Trägheitsnavigationssystems bzw. inertialen Navigationssystems (INS) gemessen, das einen Satellitenempfänger und eine inertiale Messeinheit aufweist. Die Geschwindigkeit v kann auch unter Verwendung eines sogenannten Automotive Dynamic Motion Analyzer (ADMA) ermittelt sein. Es ist in der Überlagerung 700 erkennbar, dass die dominierende Frequenz nahezu vollständig mit der Geschwindigkeit v bzw. dem Geschwindigkeitsverlauf 701 korreliert. Dadurch kann gezeigt werden, dass die Vibrationen 501 durch einen Reifen- bzw. Rad/Straßen-Kontakt verursacht sind. Beispielhaft ist entsprechend zu Fig. 6 auf der Absizsse ein Zeitraum zwischen 0 und 1000 Sekunden und auf der Ordinate Frequenzen zwischen 8 und 16 Hz aufgetragen. Zusätzlich ist bezüglich des Geschwindigkeitsverlaufs 701 auf der rechten Seite des Diagramms Geschwindigkeiten zwischen 15 und 35 Metern pro Sekunde aufgetragen.

Unter Bezugnahme auf die vorstehend beschriebenen Figuren ist anzumerken, dass unter Verwendung einer automatischen Analyse der Signale, hier des Inertialsensorsignals 106 und optional zusätzlich der Drehzahlsignale 116, 117, 118 und 119, auf periodische Unregelmäßigkeiten in der Abrollbewegung geschlossen werden kann, welche unter anderem durch Unwuchten bedingt sind. Die Bestimmung der Unwucht mittels der Vorrichtung 120 und/oder durch Ausführung des Verfahrens 200 kann realisiert werden, auch wenn im Allgemeinen mit einem Beschleunigungssensor lediglich eine Überlagerung von Störungen aller Räder 101, 102, 103 und 104 beobachtet werden kann. Um aus einer solchen Überlagerung auf einzelne Räder 101, 102, 103, 104 rückschließen zu können, wird durch die Vorrichtung 120 und/oder bei Ausführung des Verfahrens 200 eine geeignete Signalverarbeitung durchgeführt. Bei Kurvenfahrt oder aufgrund von nicht exakt identischen Raddurchmessern der Räder 101, 102, 103, 104 verändert sich im Betrieb bzw. während der Fahrt des Fahrzeugs 100 kontinuierlich eine Phasenlage, z. B. Ventilposition bei 0°, der einzelnen Räder 101, 102, 103, 104 zueinander, vgl. Differential zum Ausgleich von unterschiedlichen Raddrehzahlen. Hierbei wird eine aktuelle Phasenlage der einzelnen Räder 101, 102, 103, 104 anhand der Inkrementalgeber 111, 112, 113 und 114 bzw. Raddrehzahl-Encoder ermittelt, da bekannt ist, wie viele Ticks einer Umdrehung entsprechen. Bei Kenntnis der jeweiligen Phasenlage können die Anteile der Störung den einzelnen verursachenden Rädern 101, 102, 103 und/oder 104 zugeordnet werden.

Hinsichtlich der Signalverarbeitung bzw. Modellierung sei angemerkt, dass jedes einzelne Rad 101, 102, 103, 104 eine vom Phasenwinkel phi_n(t) abhängige Störung e_n(phi_n(t)) verursacht. Messbar und in dem Inertialsensorsignal 106 repräsentiert ist die Überlagerung e(t) = sum e_n(phi_n(t)). Der Ausdruck e_n ist hierbei eine radindividuelle periodische Funktion auf dem Intervall 0π bis 2π. Durch geeignete Messungen e(t) können, z. B. mittels Schätzung unter Verwendung der Methode kleinster Quadrate, die Funktionen e_n geschätzt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Bestimmen einer Unwucht eines Rades (101, 102, 103, 104) eines Fahrzeugs (100), wobei das Verfahren (200) folgende Schritte aufweist:
Einlesen (210) eines Inertialsensorsignals (106) von einer Schnittstelle (124) zu einer inertialen Messeinheit (105) des Fahrzeugs (100) und eines Drehzahlsignals (116, 117, 118, 119) von einer Schnittstelle (125) zu einem Inkrementalgeber (111, 112, 113, 114) zum Erfassen einer Drehzahl des Rades (101, 102, 103, 104), wobei das Inertialsensorsignal (106) eine Beschleunigung und/oder eine Drehrate des Fahrzeugs (100) relativ zu mindestens einer Bezugsachse repräsentiert, wobei die durch das Inertialsensorsignal (106) repräsentierte Beschleunigung und/oder Drehrate eine Überlagerung von durch Unwuchten aller Räder (101, 102, 103, 104) des Fahrzeugs (100) bewirkten periodischen Störeinflüssen aufweist; und
Ermitteln (220) eines die Unwucht des Rades (101, 102, 103, 104) charakterisierenden Unwuchtsignals (126) unter Verwendung des Inertialsensorsignals (106),
**dadurch gekennzeichnet, dass**
bei dem Schritt (220) des Ermittelns das Inertialsensorsignal (106) gefiltert wird, um lediglich mit einer Drehzahl zumindest eines Rades (101, 102, 103, 104) korrelierte Frequenzanteile durchzulassen, wobei die Frequenzanteile die periodischen Störeinflüsse repräsentieren.

2. Verfahren (200) gemäß Anspruch 1, bei dem im Schritt (220) des Ermittelns der Phasenwinkelverlauf des Rades (101, 102, 103, 104) unter Verwendung eines Phasenwinkelverlaufs des Rades (101, 102, 103, 104) ermittelt wird.

3. Verfahren (200) gemäß Anspruch 2, wobei im Schritt (220) des Ermittelns der Phasenwinkelverlauf des Rades (101, 102, 103, 104) unter Verwendung des Drehzahlsignals (116, 117, 118, 119) ermittelt wird.

4. Verfahren (200) gemäß einem der vorangegangenen Ansprüche, bei dem im Schritt (220) des Ermittelns dem Rad (101, 102, 103, 104) einer der periodischen Störeinflüsse aus dem Inertialsensorsignal (106) zugeordnet wird, um das Unwuchtsignal (126) zu ermitteln.

5. Verfahren (200) gemäß einem der vorangegangenen Ansprüche, bei dem im Schritt (220) des Ermittelns eine Signalverarbeitung des Inertialsensorsignals (106) durchgeführt wird, wobei die Signalverarbeitung unter Verwendung einer Rechenvorschrift durchgeführt wird, die ein Schätzverfahren, eine Ausgleichsrechnung und/oder eine Regressionsanalyse aufweist, insbesondere die Methode kleinster Quadrate.

6. Verfahren (200) gemäß einem der vorangegangenen Ansprüche, bei dem im Schritt (220) des Ermittelns ein Unwuchtsignal (126) ermittelt wird, unter Verwendung dessen das Rad (101, 102, 103, 104) des Fahrzeugs (100) identifizierbar ist und/oder die Unwucht quantifizierbar ist.

7. Verfahren (200) gemäß einem der vorangegangenen Ansprüche, mit einem Schritt (230) des Bereitstellens des Unwuchtsignals (126) zur Ausgabe an ein Steuergerät (130) des Fahrzeugs (100).

8. Vorrichtung (120), die eingerichtet ist, um die Schritte des Verfahrens (200) gemäß einem der vorangegangenen Ansprüche in entsprechenden Einheiten (121, 122, 123) auszuführen.

9. Computerprogramm, das dazu eingerichtet ist, die Schritte des Verfahrens (200) gemäß einem der vorangegangenen Ansprüche auszuführen.

10. Maschinenlesbares Speichermedium, auf dem das Computerprogramm nach Anspruch 9 gespeichert ist.

## Claims

1. Method (200) for determining an imbalance of a wheel (101, 102, 103, 104) of a vehicle (100), wherein the method (200) comprises the following steps:
reading in (210) an inertial sensor signal (106) from an interface (124) to an inertial measuring unit (105) of the vehicle (100) and a rotational speed signal (116, 117, 118, 119) from an interface (125) to an incremental encoder (111, 112, 113, 114) for capturing a rotational speed of the wheel (101, 102, 103, 104), wherein the inertial sensor signal (106) represents an acceleration and/or a rotation rate of the vehicle (100) relative to at least one reference axis, wherein the acceleration and/or rotation rate represented by the inertial sensor signal (106) has a superimposition of periodic interfering influences caused by imbalances of all wheels (101, 102, 103, 104) of the vehicle (100); and
determining (220) an imbalance signal (126) characterizing the imbalance of the wheel (101, 102, 103, 104) using the inertial sensor signal (106),
**characterized in that**
in the determining step (220) the inertial sensor signal (106) is filtered in order to allow through only frequency components correlated with a rotational speed of at least one wheel (101, 102, 103, 104), wherein the frequency components represent the periodic interfering influences.

2. Method (200) according to Claim 1, in which in the determining step (220) the phase angle profile of the wheel (101, 102, 103, 104) is determined using a phase angle profile of the wheel (101, 102, 103, 104).

3. Method (200) according to Claim 2, wherein in the determining step (220) the phase angle profile of the wheel (101, 102, 103, 104) is determined using the rotational speed signal (116, 117, 118, 119).

4. Method (200) according to one of the preceding claims, in which in the determining step (220) the wheel (101, 102, 103, 104) is assigned one of the periodic interfering influences from the inertial sensor signal (106) in order to determine the imbalance signal (126).

5. Method (200) according to one of the preceding claims, in which in the determining step (220) signal processing of the inertial sensor signal (106) is carried out, wherein the signal processing is carried out using a calculation rule comprising an estimation method, an adjustment calculation and/or a regression analysis, in particular the method of least squares.

6. Method (200) according to one of the preceding claims, in which in the determining step (220) an imbalance signal (126) is determined, using which the wheel (101, 102, 103, 104) of the vehicle (100) is identifiable and/or the imbalance is quantifiable.

7. Method (200) according to one of the preceding claims, comprising a step (230) of providing the imbalance signal (126) for output to a control device (130) of the vehicle (100).

8. Apparatus (120) configured to carry out the steps of the method (200) according to one of the preceding claims in appropriate units (121, 122, 123).

9. Computer program configured to carry out the steps of the method (200) according to one of the preceding claims.

10. Machine-readable storage medium on which the computer program according to Claim 9 is stored.

## Revendications

1. Procédé (200) de détermination d'un défaut d'équilibrage d'une roue (101, 102, 103, 104) d'un véhicule (100), le procédé (200) comprenant les étapes suivantes :
introduire (210) un signal de capteur inertiel (106) provenant d'une interface (124) dans une unité de mesure inertielle (105) du véhicule (100) et un signal de vitesse de rotation (116, 117, 118, 119) provenant d'une interface (125) dans un codeur incrémentiel (111, 112, 113, 114) pour détecter une vitesse de rotation de la roue (101, 102, 103, 104), le signal de capteur inertiel (106) représentant une accélération et/ou une vitesse de rotation du véhicule (100) par rapport à au moins un axe de référence, l'accélération et/ou la vitesse de rotation représentées par le signal de capteur inertiel (106) présentant une superposition d'influences perturbatrices périodiques provoquées par des défauts d'équilibrage de toutes les roues (101, 102, 103, 104) du véhicule (100) ; et
déterminer (220) un signal de défaut d'équilibrage (126) caractérisant le défaut d'équilibrage de la roue (101, 102, 103, 104) à l'aide du signal de capteur inertiel (106)),
**caractérisé en ce que**
lors de l'étape (220) de détermination, le signal de capteur inertiel (106) est filtré pour laisser passer des composantes de fréquence corrélées à une seule vitesse de rotation d'au moins une roue (101, 102, 103, 104), les composantes de fréquence représentant les influences perturbatrices périodiques.

2. Procédé (200) selon la revendication 1, dans lequel, lors de l'étape (220) de détermination, le profil d'angle de phase de la roue (101, 102, 103, 104) est déterminé à l'aide d'un profil d'angle de phase de la roue (101, 102, 103, 104).

3. Procédé (200) selon la revendication 2, dans lequel, lors de l'étape (220) de détermination, le profil d'angle de phase de la roue (101, 102, 103, 104) est déterminé à l'aide du signal de vitesse de rotation (116, 117, 118, 119).

4. Procédé (200) selon l'une quelconque des revendications précédentes, dans lequel, lors de l'étape de détermination (220), l'une des influences perturbatrices périodiques du signal de capteur inertiel (106) est associée à la roue (101, 102, 103, 104) pour déterminer le signal de défaut d'équilibrage (126).

5. Procédé (200) selon l'une quelconque des revendications précédentes, dans lequel, lors de l'étape (220) de détermination, un traitement de signal du signal de capteur inertiel (106) est effectué, le traitement de signal étant effectué à l'aide d'une règle de calcul qui comporte un procédé d'estimation, un calcul de compensation et/ou une analyse de régression, en particulier la méthode des moindres carrés.

6. Procédé (200) selon l'une quelconque des revendications précédentes, dans lequel, lors de l'étape (220) de détermination, un signal de défaut d'équilibrage (126) est déterminé, à l'aide duquel la roue (101, 102, 103, 104) du véhicule (100) est identifiable et/ou le défaut d'équilibrage est quantifiable.

7. Procédé (200) selon l'une quelconque des revendications précédentes, comprenant une étape (230) de fourniture du signal de défaut d'équilibrage (126) afin de le délivrer à un appareil de commande (130) du véhicule (100).

8. Dispositif (120) qui est conçu pour exécuter les étapes du procédé (200) selon l'une quelconque des revendications précédentes dans des unités correspondantes (121, 122, 123).

9. Programme informatique qui est conçu pour exécuter es étapes du procédé (200) selon l'une quelconque des revendications précédentes.

10. Support de stockage lisible par machine, sur lequel est stocké le programme informatique selon la revendication 9.
